# EUROPÄISCHE PATENTSCHRIFT

(11) **EP 2 549 167 B1**
(45) Veröffentlichungstag und Bekanntmachung des Hinweises auf die Patenterteilung: **01.10.2014**
(21) Anmeldenummer: 12005217.0
(22) Anmeldetag: 16.07.2012
(51) Int. Cl.: F16L 59/135

(54) **Thermisch isolierende Rohrschelle**
Thermally insulating pipe clamp
Collier à isolation thermique

(30) Priorität: 16.07.2011 DE 102011107573
(43) Veröffentlichungstag der Anmeldung: 23.01.2013
(73) Patentinhaber: Secura Services AG, 8404 Winterthur (CH)
(72) Erfinder: Müller, Harald, 65719 Hofheim-Wallau (DE); Kruse, Reinhard, 63571 Gelnhausen (DE)
(74) Vertreter: Erb, Henning

(56) Entgegenhaltungen:
- DE-A1- 10 302 001
- DE-U1- 29 910 505
- DE-U1-202010 006 863

## Beschreibung

Die vorliegende Erfindung befasst sich mit einer thermisch isolierenden Rohrschelle mit einem Halter zur Wand-, Boden- oder Deckenmontage, einem ringförmigen Isolierkörper und einem Schellenkörper, der an wenigstens einer Stelle geteilt und mit dem Halter verbunden ist.

Rohrschellen zur Montage von Rohrleitungen sind vielfältig bekannt. Für einfache Rohranlagen ohne kritische Temperaturen haben sich seit einiger Zeit Rohrschellen durchgesetzt, die mit Schalldämmeinlagen versehen sind, um eine Geräuschübertragung von den Rohrleitungen ins Mauerwerk zu vermeiden. In der Regel kann die Schalldämmeinlage das Rohr unmittelbar umgreifen.

Eine solche dämmende Rohrschelle ist z. B. aus der DE 103 02 001 A1 bekannt. Die Schalldämmeinlage ist in üblicher Weise zwischen Rohr und Schelle angeordnet, während zwischen dem Halter und der Schelle thermisch isolierendes Material vorgesehen ist, das nicht im Kraftfluss liegt. Der Kraftfluss wird durch eine Schweißringfläche zwischen Schellenteil und Halter sichergestellt.

Die DE 20 2010 068 863 zeigt eine Rohrschelle mit Halbschalen als Dämmelement.

Für besondere Anwendungsfälle im Hochtemperatur- oder Kältebereich sind auch bereits thermisch isolierende Rohrschellen bekannt, die einen ringförmigen Isolierkörper aufweisen, der im Bereich der Rohrschelle eine Rohrleitung umgreift, da dort die im übrigen separat anzubringende Wärmedämmung der Rohrleitung, z. B. gemäß der DE 199 08 673 A1 nicht eingesetzt werden kann. Problematisch bei diesen Rohrschellen ist, dass die thermisch isolierenden Körper in der Regel keine Schalldämmeigenschaften besitzen, oder diese Eigenschaften wegen der geforderten Temperaturbeständigkeit zumindest sehr eingeschränkt sind. Ein Beispiel für eine derartige Lösung ist aus der DE 36 34 340 C1 bekannt.

Um auch eine thermisch isolierende Rohrschelle mit Schalldämmwirkung zur Verfügung zu haben, sind bereits Ausführungsformen bekannt, bei welchen ein Isolierkörper aus geschäumtem Glas von einer handelsüblichen Rohrschelle mit einer zwischenliegenden Schalldämmeinlage umspannt wird. Neben der hohen Teile Anzahl ist auch eine erschwerte Handhabung dieser Schelle festzustellen.

Die Aufgabe der vorliegenden Erfindung besteht darin, eine Rohrschelle der eingangs genannten Art dahingehend zu verbessern, dass sie bei einfacher Handhabung neben der gewünschten Wärmeisolierung auch Schalldämmeigenschaften aufweist, um eine Geräuscheinleitung in das Mauerwerk zu vermeiden.

Erfindungsgemäß wird die Aufgabe durch eine Rohrschelle der eingangs genannten Art gelöst, das zwischen den mit dem Isolierkörper verbundenen Schellenkörper und dem Halter als einzige Verbindung wenigstens ein im Kraftfluss liegendes Schalldämmelement vorgesehen ist.

Es hat sich gezeigt, dass mit dieser neuartigen Anordnung des Schalldämmelements zwischen dem Schellenkörper und dem Halter und nicht zwischen dem Schellenkörper und dem Isolierkörper zum einen eine vereinfachte Handhabung beim Anbringen der Schelle an dem Rohrelement erreicht werden kann, wobei durch den Wegfall der Mehrteiligkeit auch eine Vereinfachung erreicht wird. Es hat sich dabei gezeigt, dass durch das Schalldämmelement in seiner neuen Lage ebenfalls gute Schalldämmwerte erreichen lassen, die für eine hinreichende Entkopplung vom Mauerwerk sorgen.

Die Verbindung zwischen dem Schellenkörper und dem Isolierkörper ist dabei weitestgehend starr, so dass die Rohrschelle präzise auf dem Rohr festgelegt werden kann.

Für die Ausbildung des wenigstens einen Schalldämmelements sind mehrere Varianten möglich. Zum einen ist es möglich, dass das wenigstens eine Schalldämmelement an einem Schraubenflansch des Schellenkörpers einspannbar ist, wobei der Halter fest mit dem Schalldämmelement verbunden ist. Beispielsweise kann das wenigstens eine Schalldämmelement als definierte Schalldämmhülse ausgebildet sein, durch die eine Spannschraube der Schelle verläuft. Beim Verschließen der Spannschraube wird damit die Schalldämmhülse fixiert, wobei ggf. die Schalldämmeigenschaften durch die Wahl der Spannkraft beeinflusst werden können.

Bei einer alternativen Ausführungsform der Erfindung ist vorgesehen, dass der Halter mit einem Schellensegment verbunden ist, wobei zwischen dem Schellensegment und dem Schellenkörper das wenigstens eine Schalldämmelement vorgesehen ist. Schellensegment heißt, das dieses Teil im wesentlichen konzentrisch zum Schellenkörper ausgebildet ist und radial außerhalb, radial innerhalb oder axial neben dem Schellenkörper angeordnet ist. Bevorzugt ist eine Lage radial innerhalb des Schellenkörpers, wobei der Halter dann durch eine Öffnung im Schellenkörper greift. Diese Anordnung hat den Vorteil, dass beispielsweise bei einem Brand und einem zerstörten Schalldämmelement das Schellensegment sich immer noch an dem Schellenkörper abstützen kann, so dass ein gewisser Halt immer noch gegeben ist.

Vorzugsweise ist das Schalldämmelement bei dieser Ausführungsform als wenigstens teilweise Umhüllung des Schellensegments ausgebildet, wobei das elastische Material ggf. auch sowohl mit dem Schellenkörper als auch mit dem Schellensegment verbunden sein kann. Hohlräume im Bereich des Schalldämmelements können vorgesehen sein, um bestimmte elastische Eigenschaften und damit Schalldämmeigenschaften einzustellen.

Vorzugsweise ist der Innendurchmesser der Rohrschelle zum Umgreifen eines Rohres mit einem elastischen Material verkleidet.

In der Regel wird die elastische Verkleidung an dem Isolierkörper vorgesehen sein, sofern der Schellenkörper in dem Isolierkörper integriert ist oder diesen umfasst. Bei einer Anordnung des Schellenkörpers am Innendurchmesser des Isolierkörpers kann diese elastische Beschichtung auch unmittelbar an dem Schellenkörper vorgesehen sein. Dieses elastische Material dient zum Toleranzausgleich von Maßabweichungen beim Rohraußendurchmesser.

Als Material für den Isolierkörper wird vorzugsweise geschäumte Keramik, Blähton oder geschäumtes Glas eingesetzt. Neben alternativen bekannten Materialien, wie z.B. geschäumtem PU, besitzen die zuerst genannten Materialien den Vorteil, dass sie erhöhten Brandschutzanforderungen genügen. Je nach konstruktiver Ausgestaltung der Rohrschelle kann es auch sinnvoll sein, das Material für das Schalldämmelement derart auszuwählen, dass es den Baustoffklassen A bzw. B nach EN 13501-1 genügt.

Sofern eine erhöhte mechanische Anspruchung des Isolierkörpers zu erwarten ist, insbesondere in den Fällen, in welchen die Last des zu montierenden Rohres über den Isolierkörper an dem Schellenkörper übertragen wird, kann es vorteilhaft sein, die Festigkeitseigenschaften des Isolierkörpers zu erhöhen. Vorzugsweise ist daher der Isolierkörper mit Fasern verstärkt, beispielsweise Kohle- oder Glasfasern.

Wie bereits angedeutet, kann der Schellenkörper am Außen- oder Innendurchmesser des Isolierkörpers angeordnet oder in diesen eingebettet sein, wobei vorzugsweise der Schellenkörper in zwei Hälften geteilt ist, die über Schrauben- und / oder Gelenkverbindungen miteinander verbunden sind. Die Schraub- oder Gelenkverbindungen können in den Isolierkörper versenkt eingebettet sein, sollten aber aus Montagegründen selbstverständlich gut zugänglich bleiben. Bei eingebetteten oder an dem Innendurchmesser der Rohrschelle angeordneten Schellenkörper ist es auch notwendig, dass der Isolierkörper in zwei entsprechende Hälften geteilt ist.

Vorzugsweise ist bei einem geteilten Isolierkörper die Trennfuge zwischen den beiden Körpern mit einem dauerelastischen Dichtungsmaterial versiegelt. Hierdurch wird das Eindringen von Feuchtigkeit bzw. die Kondensation von Feuchtigkeit verhindert, wenn die Schelle beispielsweise bei Prozesskälteleitungen eingesetzt wird.

Unabhängig davon eignet sich die thermisch isolierende Rohrschelle von ihrem Aufbau sowohl für Kälte- als auch für Hitzeanwendungen, wobei der primäre Einsatzzweck als Kälteschelle angedacht ist.

Das Schalldämmelement besteht in der Regel vollständig aus einem Schall absorbierenden Material, das je nach konstruktiver Ausführungsform aber auch mit metallischen Elementen verbunden sein kann, um es an den Schellenkörper und / oder an dem Halter montieren zu können. Das Schalldämmelement kann aber auch aufvulkanisiert sein.

Als Schall absorbierende Materialien können beispielsweise TPE, TPV (PP + EPDM), EPDM, PU oder auch andere geeignete Materialien zum Einsatz kommen.

Nachfolgend wird anhand der beigefügten Zeichnungen näher auf Ausführungsformen der Erfindung eingegangen. Es zeigen:
Fig. 1 eine geschnittene Darstellung einer thermisch isolierenden Rohrschelle;
Fig. 1a eine vergrößerte geschnittene Einzelheit einer abgewandelten thermisch isolierenden Rohrschelle mit in die Isolierung integrierter Verschraubung der Schelle;
Fig. 2 einen Schnitt einer weiteren Ausführungsform einer thermisch isolierenden Rohrschelle;
Fig. 3 eine Seitenansicht einer dritten Ausführungsform;
Fig. 4 eine geschnittene Darstellung der Rohrschelle nach Fig.3;
Fig. 5 eine im Vergleich zu Fig. 3 um 90 ° gedrehte Ansicht der Rohrschelle nach Fig. 3.

Eine thermisch isolierende Rohrschelle 10 besitzt einen in zwei Hälften geteilten Isolierkörper 12, in welchen ein entsprechend dem Isolierkörper 12 geteilter Schellenkörper 14 eingebettet ist. Der Schellenkörper 14 besitzt zwei Flansche 16, wobei beide Schellenhälften fluchtende Bohrungen 18 aufweisen, die durch Schraubverbindungen 20 miteinander verbunden sind. Die Flansche 16 liegen in der Trennfuge 22 des Isolierkörpers 12, wobei diese Trennfuge 22 durch ein dauerelastisches Material abgedichtet ist. Am Innendurchmesser 24 des Isolierkörpers 12 ist eine Schicht 26 aus dauerelastischen Material vorgesehen, um eventuelle Maßabweichungen am Rohrdurchmesser auszugleichen.

Die Rohrschelle 10 verfügt über einen Halter 28, der aber nicht unmittelbar mit dem Schellenkörper 14 verbunden ist, wie dies bei Rohrschellen üblich ist. Vielmehr ist an dem Halter 28 ein Schellensegment 30 vorgesehen, das radial innerhalb der oberen Hälfte des Schellenkörpers 14 angeordnet ist, wobei das Schellensegment 30 derart gekrümmt ist, dass es im wesentlichen konzentrisch zu dem Schellenkörper 14 liegt. Der Halter 28 ragt durch eine Öffnung 32 im Schellenkörper 14, wobei auch der Isolierkörper 12 eine Aussparung 34 in diesem Bereich aufweist, damit ein Gewindeanschluss 36 des Halters 28 zur Anbringung der Schelle an einer decken- oder wandseitig festgelegten Konsole zugänglich bleibt.

Als Material für den Isolierkörper 12 ist geschäumte Keramik vorgesehen, die neben sehr guten Wärmedämmwerten auch eine recht gute mechanische Festigkeit besitzt und zudem höchsten Brandschutzanforderungen genügt. Alternative Materialien sind Blähton oder geschäumtes Glas, wobei in den Fällen, in welchen keine hohen Brandschutzanforderungen gestellt sind, auch geschäumte Kunststoffe zum Einsatz kommen können, wie z.B. geschäumtes PU. Sofern die Materialfestigkeitswerte des Isolierkörpers 12 nicht ausreichend sein sollten, kann dieser durch Fasern verstärkt sein, beispielsweise Kohle- oder Glasfasern, wobei auch sein Diffusionsverhalten und seine Oberflächeneigenschaften durch bestimmte Zuschlagstoffe gezielt beeinflussbar sind.

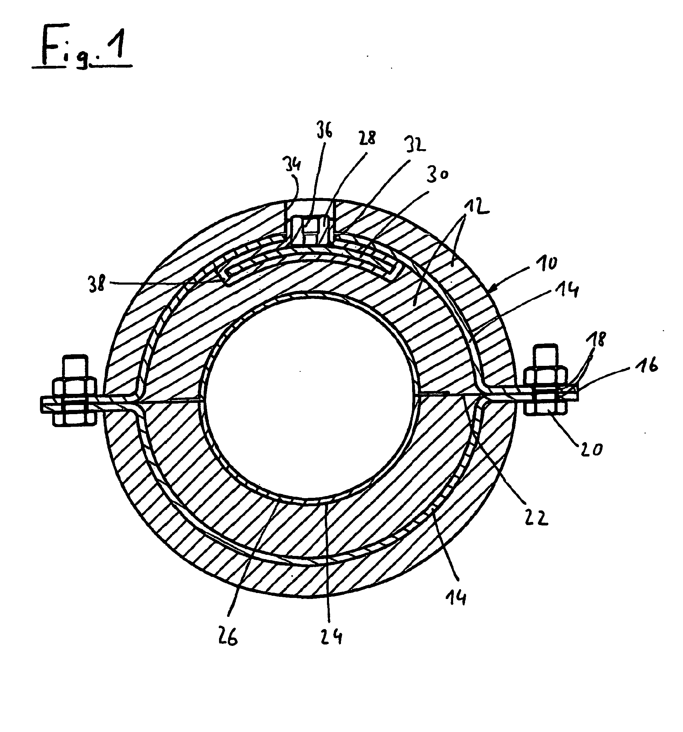

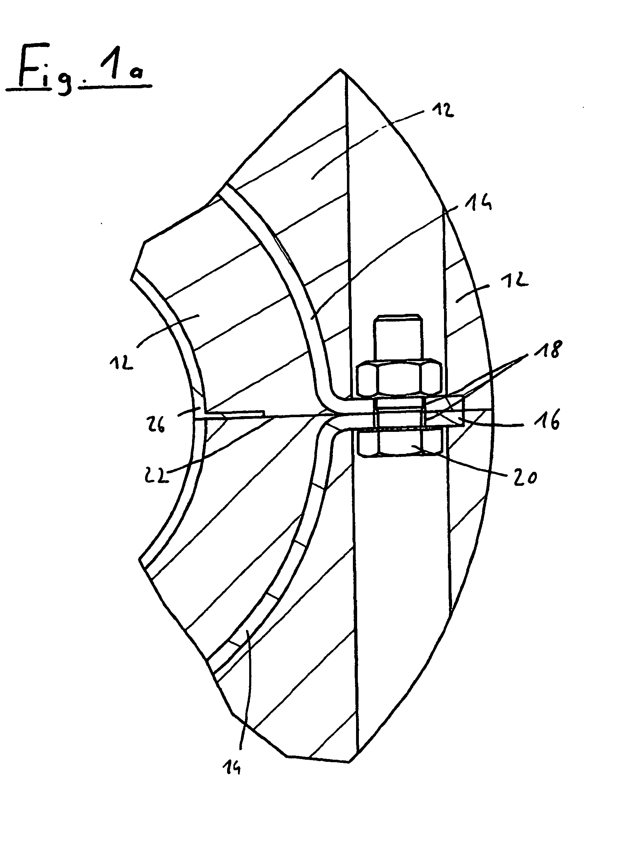

Insbesondere bei den Materialien geschäumte Keramik, Blähton oder geschäumten Glas (Foamglas) besitzt die Rohrschelle aufgrund der mangelnden Elastizität dieser Materialien als solche nur ungenügende Schalldämmeigenschaften, so dass eine Übertragung von Geräuschen von der Rohrleitung ins Mauerwerk möglich ist. Aus diesem Grund ist das Schellensegment mit einem Schalldämmelement 38 umformt, das beispielsweise aufvulkanisiert ist und auch die Halterung 28 umgibt. Das Schalldämmelement 38 sorgt für eine akustische Entkopplung des Schellensegments 30 von dem Schellenkörper 14, wobei die Schalldämmeigenschaften durch Materialwahl, Dicke und ggf. auch Aussparungen in der Ummantelung eingestellt werden können. Bei dem gezeigten Ausführungsbeispiel wird die Last einer montierten Rohrleitung über den Isolierkörper 12 an den Schellenkörper 14 und dann über das Schalldämmelement 38 an das Schellensegment 30 und der mit diesem verbundenen Halterung 28 abgetragen. Die großflächige Ausbildung des Schalldämmelements 38 zwischen dem Schellensegment 30 und dem Schellenkörper 14 ermöglicht dabei problemlos das Übertragen auch höherer Lasten. Geeignete Materialien für das Schalldämmelement 38 sind TPE, TPV (PP+ EPDM), EPDM, PU aber auch andere schallabsorbierende Materialien, wobei ggf. Brandschutzanforderungen berücksichtigt werden sollten. Es ist aber darauf hinzuweisen, dass die in Fig. 1 und auch 2 gezeigten Ausführungsformen eine gewisse Brandstabilität dadurch erreichen, das selbst nach einem Schmelzen oder Verbrennen des Schalldämmelements der Schellenkörper 14 immer noch sicher auf dem Schellensegment 30 ruht und die Last der Rohrleitung abgetragen werden kann.

Die gezeigte Rohrschelle eignet sich je nach Materialauswahl sowohl als Kälteschelle aber auch für die Isolierung von Wärmeleitungen.

In Fig. 1a ist eine Ausführungsform gezeigt, die sich konstruktiv von der in Fig. 1 gezeigten Ausführungsform dadurch unterscheidet, dass auch die Flansche der Schellenkörper 14 in den Isolierkörper 12 integriert sind, so dass die Schraubverbindung 20 vom Isolierkörper 12 umhüllt ist. Dabei kann der Teil der Schraubverbindung 20, der die Funktion der Mutter ausbildet auch vollständig in den Isolierkörper 12 eingebettet sein.

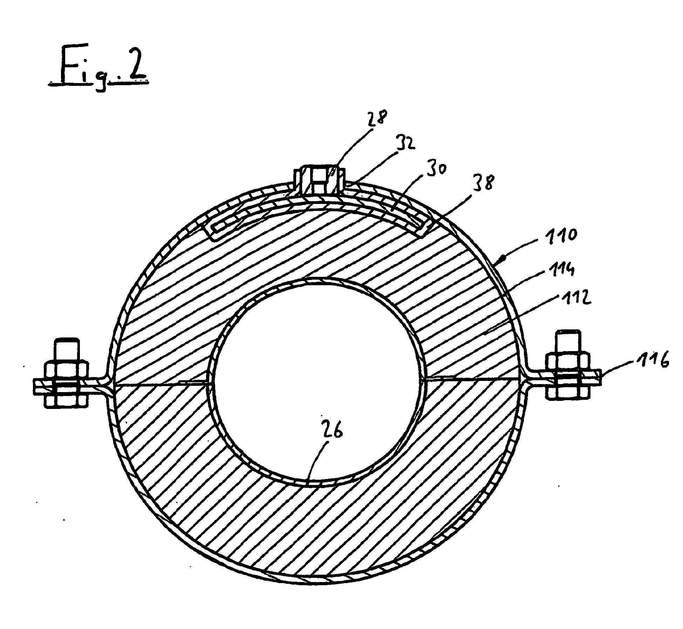

In Fig. 2 ist eine Ausführungsform gezeigt, die konstruktiv weitestgehend der in Fig. 1 gezeigten Ausführungsform entspricht. Allerdings ist bei dieser Ausführungsform ein Schellenkörper 114 nicht in einem Isolierkörper 112 eingebettet, sondern umfasst diesen radial an der Außenseite. Durch diese Ausführungsform lässt sich eine besonders gute geschlossene Isolierung der Rohrleitung erreichen. Im übrigen ist der Aufbau des Schellenkörpers 114, des Halters 28 sowie des Schellensegments 30 und des zwischenliegenden Schalldämmelements 38 identisch, so dass dies an dieser Stelle nicht mehr weiter ausgeführt werden muss.

Hinzuweisen ist noch darauf, dass eine der beiden Schraubenflansche 16 zwischen den beiden Hälften des Schellenkörpers 14 bei den beiden zuvor gezeigten Ausführungsformen auch als Gelenkverbindung ausgebildet sein kann, um die Rohrschelle 10 vor dem Anziehen aufschwenken und um das Rohr legen zu können.

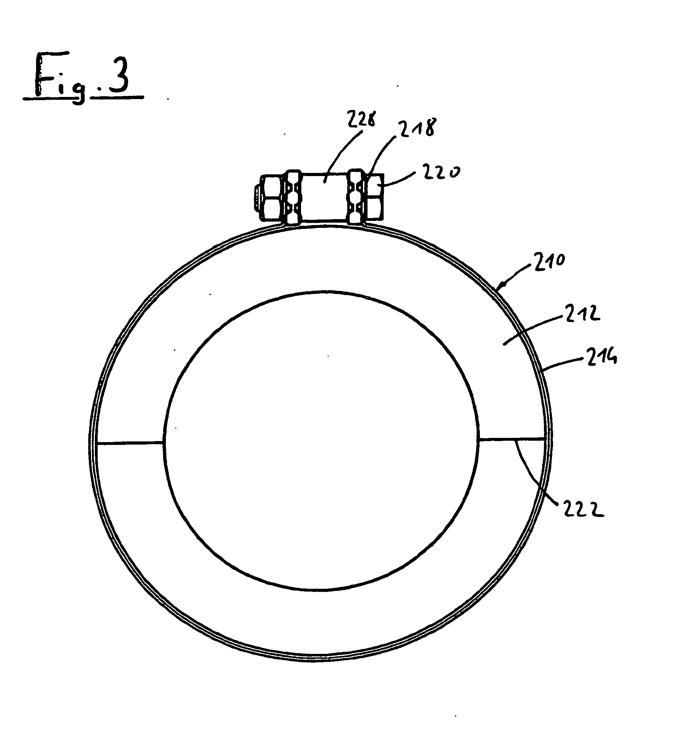

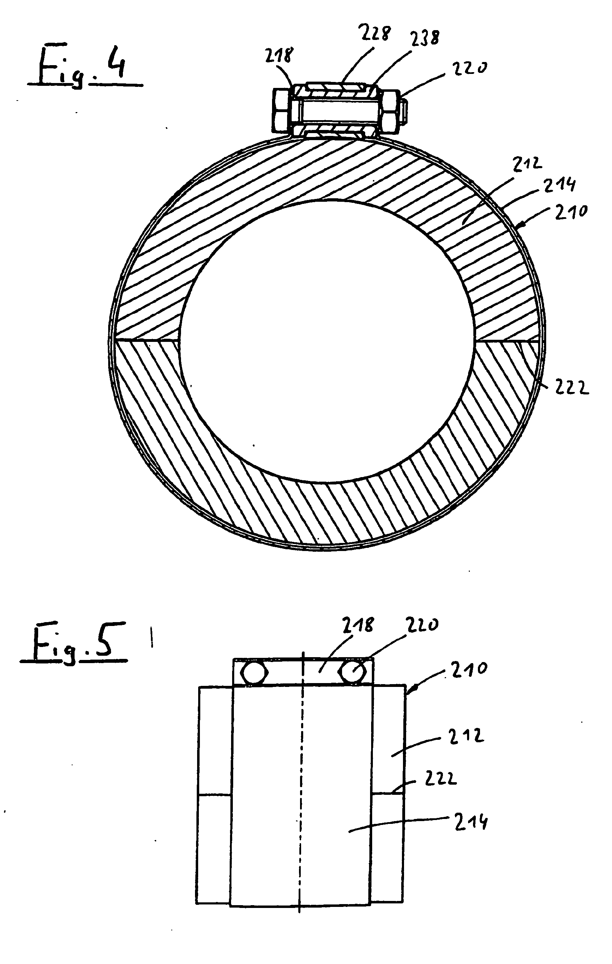

Eine alternative Ausführungsform ist in Fig. 3 bis 5 gezeigt. Die dort gezeigte Rohrschelle 210 besitzt einen ringförmigen Isolierkörper 212, der wiederum mittels einer Trennfuge 222 in zwei Hälften geteilt ist. Abweichend ist bei dieser Ausführungsform der Schellenkörper 214 ausgeführt, der einteilig ausgebildet ist und den Isolierkörper 212 vollständig umschlingt. Im Bereich eines Halters 228 besitzt der Schellenkörper 240 radial nach außen gestellte Laschen 218, die in einem bestimmten Abstand zueinander liegen. Wie in Fig. 4 besser zu erkennen ist, wird mittels einer Befestigungsschraube 220 und einer zugehörigen Mutter ein Schalldämmelement 238 zwischen den beiden Laschen 218 verspannt, wobei das Schalldämmelement 238 mit dem Halter 228 verbunden ist, der geeignete Befestigungselemente (nicht gezeigt), z.B. eine Gewindebohrung oder dergleichen aufweist, um die Rohrschelle 210 Decken- oder wandseitig festlegen zu können. Als Material für das Schalldämmelement 238 kommen die bei der zuvor beschriebenen Ausführungsform erwähnten Materialien zum Einsatz.

Um die Dimensionen der Rohrschelle zu verdeutlichen, ist in Fig. 5 eine gegenüber Fig. 3 um 90° gedrehte Ansicht der Rohrschelle 210 gezeigt, aus der deutlich wird, dass die Laschen 218 des Schellenkörpers 214 mit zwei Befestigungsschrauben 220 miteinander verbunden sind. Gut erkennbar ist auch, dass der Isolierkörper 212 seitlich über den Schellenkörper 214 übersteht.

Allen gezeigten Ausführungsformen ist gemein, dass der Schellenkörper eine gegenüber herkömmlichen Rohrschellen deutlich größere Breite besitzt, um die Last gleichmäßig zu verteilen. In der Regel überdeckt die Breite des Schellenkörpers wenigstens die Hälfte der Länge des Isolierkörpers insbesondere, wenn keine Zwischenlage zur Lastverteilung vorgesehen ist.

## Patentansprüche

1. Thermisch isolierende Rohrschelle mit einem Halter (28; 228) zur Wand-, Boden- oder Deckenmontage, einem ringförmigen Isolierkörper (12; 112; 212) und einem Schellenkörper (14; 114; 214), der an wenigstens einer Stelle geteilt und mit dem Halter (28; 128; 228) verbunden ist, **dadurch gekennzeichnet, dass** zwischen dem mit dem Isolierkörper (12; 112; 212) verbundenen Schellenkörper (14; 114; 214) und dem Halter (28; 228) als einzige Verbindung wenigstens ein im Kraftfluss liegendes Schalldämmelement (38; 238) vorgesehen ist.

2. Rohrschelle nach Anspruch 1, **dadurch gekennzeichnet, dass** das wenigstens eine Schalldämmelement (238) an einem Schraubenflansch des Schellenkörpers (214) einspannbar ist, wobei der Halter (228) mit dem Schalldämmelement (238) verbunden ist.

3. Rohrschelle nach Anspruch 2, **dadurch gekennzeichnet, dass** das wenigstens eine Schalldämmelement (238) als Hülse ausgebildet ist, durch die eine Spannschraube (20) der Schelle (220) bei Spannschrauben verläuft.

4. Rohrschelle nach Anspruch 1, **dadurch gekennzeichnet, dass** der Halter (28) mit einem Schellensegment (30) verbunden ist, wobei zwischen dem Schellensegment (30) und dem Schellenkörper (14; 114) das Schalldämmelement (38) vorgesehen ist.

5. Rohrschelle nach Anspruch 4, **dadurch gekennzeichnet, dass** das Schalldämmelement (38) als wenigstens teilweise Umhüllung des Schellensegments (30) ausgebildet ist.

6. Rohrschelle nach Anspruch 4 oder 5, **dadurch gekennzeichnet, dass** das Schellensegment (30) mit dem Schellenkörper überlappend ausgebildet ist, wobei das Schellensegment (30) radial innenseitig des Schellenkörpers (14; 114) liegt und der Halter (28) durch eine Öffnung (32) im Schellenkörper (14) greift.

7. Rohrschelle nach einem vorhergehenden Ansprüche
**dadurch gekennzeichnet, dass** der Innendurchmesser der Rohrschelle (10; 110; 210) zum Umgreifen eines Rohres mit einem elastischen Material verkleidet ist.

8. Rohrschelle nach einem der vorhergehenden Ansprüche, **dadurch gekennzeichnet, dass** der Isolierkörper (12; 112; 212) aus geschäumter Keramik, Blähton oder geschäumtem Glas besteht.

9. Rohrschelle nach Anspruch 8, **dadurch gekennzeichnet, dass** das Material des Isolierkörpers (12; 112; 212) mit Fasern verstärkt ist.

10. Rohrschelle nach einem der vorhergehenden Ansprüche, **dadurch gekennzeichnet, dass** der Schellenkörper (14;114;214) am Außen- oder Innendurchmesser des Isolierkörpers (12; 112; 212)angeordnet oder in diesem eingebettet ist.

11. Rohrschelle nach einem der vorhergehenden Anprüche, **dadurch gekennzeichnet, dass** der Schellenkörper in zwei Hälften geteilt ist, die über Schrauben- und / oder Gelenkverbindungen miteinander verbunden sind.

12. Rohrschelle nach Anspruch 11 **dadurch gekennzeichnet, dass** die Schraub- oder Gelenkverbindungen in dem Isolierkörper versenkt angeordnet sind.

13. Rohrschelle nach einem der vorhergehenden Ansprüche, **dadurch gekennzeichnet, dass** der Isolierkörper (12; 112; 212) in zwei Hälften geteilt ist.

14. Rohrschelle nach Anspruch 13, **dadurch gekennzeichnet, dass** eine Trennfuge (22) zwischen den beiden Hälften des Isolierkörpers (12; 112; 212) mit einem dauerelastischen Dichtungsmaterial versiegelt ist.

15. Rohrschelle nach einem der vorhergehenden Ansprüche, **dadurch gekennzeichnet, dass** der Schalldämmkörper aus TPE, TPV (PP+EPDM), EPDM oder PU besteht.

## Claims

1. A thermally insulating pipe clamp, with a holder (28;228) for wall, floor or ceiling mounting, with an annular insulating member (12;112;212) and a clamp member (14;114;214) which is divided at at least one point and is connected to the holder (28;128;228), **characterised in that** between the clamp member (14;114;214) connected to the insulating member (12;112;212) and the holder (28;228), there is provided as the only connection at least one sound-insulating element (38;238) situated in the flux.

2. A pipe clamp according to Claim 1, **characterised in that** the at least one sound-insulating element (238) can be clamped on a screw flange of the clamp member (214), wherein the holder (228) is connected to the sound-insulating element (238).

3. A pipe clamp according to Claim 2, **characterised in that** the at least one sound-insulating element (238) is in the form of a sleeve, through which a clamping screw (20) of the clamp (220) extends in the case of set-screws.

4. A pipe clamp according to Claim 1, **characterised in that** the holder (28) is connected to a clamp segment (30), wherein the sound-insulating element (38) is provided between the clamp segment (30) and the clamp member (14;114).

5. A pipe clamp according to Claim 4, **characterised in that** the sound-insulating element (38) is formed as an at least partial enclosure of the clamp segment (30).

6. A pipe clamp according to Claim 4 or 5, **characterised in that** the clamp segment (30) is designed to overlap with the clamp member, wherein the clamp segment (30) is situated radially inside the clamp member (14;114) and the holder (28) engages through an opening (32) in the clamp member (14).

7. A pipe clamp according to any one of the preceding Claims, **characterised in that** the inner diameter of the pipe clamp (10;110;210) is covered with an elastic material to wrap around a pipe.

8. A pipe clamp according to any one of the preceding Claims, **characterised in that** the insulating member (12;112;212) consists of foamed ceramic material, expanded clay or foamed glass.

9. A pipe clamp according to Claim 8, **characterised in that** the material of the insulating member (12;112;212) is reinforced with fibres.

10. A pipe clamp according to any one of the preceding Claims, **characterised in that** the clamp member (14;114;214) is arranged on the outer diameter or inner diameter of the insulating member (12;112;212) or is embedded therein.

11. A pipe clamp according to any one of the preceding Claims, **characterised in that** the clamp member is divided into two halves which are connected to one another via screw and/or hinge connections.

12. A pipe clamp according to Claim 11, **characterised in that** the screw or hinge connections are arranged recessed in the insulating member.

13. A pipe clamp according to any one of the preceding Claims, **characterised in that** the insulating member (12;112;212) is divided into two halves.

14. A pipe clamp according to Claim 13, **characterised in that** a separation joint (22) between the two halves of the insulating member (12;112;212) is sealed with a permanently elastic sealing material.

15. A pipe clamp according to any one of the preceding Claims, **characterised in that** the sound-insulating member consists of TPE, TPV (PP+EPDM), EPDM or PU.

## Revendications

1. Collier thermiquement isolant comportant un élément d'appui (28, 228) pour permettre son montage sur une paroi un sol ou un plafond, un corps isolant annulaire (12, 112, 212) et un corps de collier (14, 114, 214) qui est subdivisé en au moins un point et est relié à l'élément d'appui (28, 128, 228),
**caractérisé en ce qu'**
entre le corps de collier (14, 114, 214) relié au corps isolant (12, 112, 212) et l'élément d'appui (28, 228) est monté en tant qu'unique liaison, un élément d'isolation phonique (38, 238) situé dans le flux des forces.

2. Collier conforme à la revendication 1,
**caractérisé en ce que**
l'élément d'isolation phonique (238) peut être serré sur une bride filetée du corps de collier (214), l'élément d'appui (228) étant relié à cet élément d'isolation phonique (238).

3. Collier conforme à la revendication 2,
**caractérisé en ce que**
l'élément d'isolation phonique (238) est réalisé sous la forme d'un manchon au travers duquel s'étend une vis de serrage (20) du collier (220) lors du serrage par vissage.

4. Collier conforme à la revendication 1,
**caractérisé en ce que**
l'élément d'appui (28) est relié à un segment de collier (30), l'élément d'isolation phonique (38) étant monté entre ce segment de collier (30) et le corps de collier (14, 114).

5. Collier conforme à la revendication 4,
**caractérisé en ce que**
l'élément d'isolation phonique (38) est réalisé sous la forme d'une enveloppe au moins partielle du segment de collier (30).

6. Collier conforme à la revendication 4 ou 5,
**caractérisé en ce que**
le segment de collier (30) est réalisé de façon à chevaucher le corps de collier, le segment de collier (30) s'étendant radialement sur la face interne du corps de collier (14, 114) et l'élément d'appui (28) venant en prise par une ouverture (32) dans le corps de collier (14).

7. Collier conforme à l'une des revendications précédentes,
**caractérisé en ce que**
le diamètre interne du collier (10, 110, 210) est revêtu d'un matériau élastique pour entourer un tube.

8. Collier conforme à l'une des revendications précédentes,
**caractérisé en ce que**
le corps isolant (12, 112, 212) est réalisé en mousse de céramique, en argile expansée ou en mousse de verre.

9. Collier conforme à la revendication 8,
**caractérisé en ce que**
le matériau du corps isolant (12, 112, 212) est renforcé par des fibres.

10. Collier conforme à l'une des revendications précédentes, **caractérisé en ce que**
le corps de collier (14, 114, 214) est situé sur le diamètre interne ou externe du corps isolant (12, 112, 212) ou est noyé dans celui-ci.

11. Collier conforme à l'une des revendications précédentes, **caractérisé en ce que**
le corps de collier est subdivisé en deux moitiés qui sont reliées entre elles par des liaisons par vis ou par charnières.

12. Collier conforme à la revendication 11,
**caractérisé en ce que**
les liaisons par vis ou par charnières sont noyées dans le corps isolant.

13. Collier conforme à l'une des revendications précédentes, **caractérisé en ce que**
le corps isolant (12, 112, 212) est subdivisé en deux moitiés.

14. Collier conforme à la revendication 13,
**caractérisé en ce qu'**
un joint de séparation (22) est scellé entre les deux moitiés du corps isolant (12, 112, 212) par un matériau d'étanchéité à élasticité permanente.

15. Collier conforme à l'une des revendications précédentes, **caractérisé en ce que**
le corps d'isolation phonique est réalisé en TPE, TPV (PP + EPDM), EPDM ou PU.
